# EUROPEAN PATENT SPECIFICATION

(11) **EP 0 685 972 B1**
(45) Date of publication and mention of the grant of the patent: **25.02.2004**
(21) Application number: 95302606.9
(22) Date of filing: 19.04.1995
(51) Int. Cl.: H04Q 7/38, H04Q 7/20

(54) **Mobile communication system and method therefore**
Mobiles Kommunikationssystem und Verfahren hierfür
Système de communication mobile et procédé pour sa mise en oeuvre

(30) Priority: 31.05.1994 FI 942548
(43) Date of publication of application: 06.12.1995
(73) Proprietor: Nokia Corporation, 02150 Espoo (FI)
(72) Inventor: Kiema, Arto, SF-24280 Salo (FI)
(74) Representative: Kupiainen, Juhani Kalervo

(56) References cited:
- EP-A- 0 544 449
- DE-C- 4 415 734

## Description

The invention relates to a method for implementing additional features in a mobile communication system, specifically in a mobile communication system in which the subscriber is not bound to a particular mobile equipment and in which the equipment used by the subscriber can be identified. The invention also concerns a mobile communication system of the above description using the inventive method.

In recent years mobile phones have become more and more popular. This has lead to the development and introduction of new, more extensive mobile communication systems providing more versatile services and using more advanced technology. New digital mobile communication systems, like the European GSM, have been designed to cover areas comprising several countries. That is why their operation and characteristics are regulated by international standards which make sure that equipment produced by various manufacturers complying with the standards can be used anywhere in the area covered by the system and that the system network, comprising several networks administered and maintained by various network operators, functions everywhere in a consistent way. In the GSM system, such standards are called GSM specifications.

Considering that the development of technology is rapid and, on the other hand, that both the manufacturers and network operators are willing to develop new features and provide better services for the users of the networks and mobile stations, the standards can also be an impediment to the introduction of new features, especially when such additional features cannot be specified by standards and, hence, become supported by the networks in a reasonable time or when their implementation through standardization for some reason seems quite impossible.

In order for a manufacturer capable of developing features exceeding the standards and a network operator willing to use them in the network to be able to implement these kind of features in a mobile communication system, a method is needed with which it is possible to enable, when a network of such an operator communicates with a mobile equipment of such a manufacturer, operation of the mobile equipment exceeding the standards which the network of the operator is prepared to support.

In accordance with a first aspect of the invention there is provided a method for implementing additional features in a mobile communication system
in which the network comprises networks maintained and managed by operators,
where the networks of the various operators and the mobile equipment manufactured by different manufacturers operate in a manner harmonized and limited by standards,
where mobile equipment (ME) have a mobile equipment identity code (IMEI) identifying at least the manufacturer and production series of the equipment and the network can request that identity code,
where at least one mobile equipment manufacturer has implemented additional features exceeding standards at least in one production series, and
where the operator's network (ON) supports at least some of the additional features exceeding the standards, characterized in that
the operator's network (ON), having requested the equipment identity code (IMEI) from a mobile equipment (ME), connects the information (AFS) defining the additional features of the equipment with the equipment identity code (IMEI),
the operator's network (ON) determines on the basis of the information (AFS) defining the additional features what additional features it supports and signals the result (SFS) of the determination to the mobile equipment (ME), and
on the basis of the signaled result (SFS) of the determination the mobile equipment (ME) enables the operation of the additional features supported by the network.

In accordance with a second aspect of the invention there is provided a mobile communication system,
in which the network comprises networks maintained and managed by operators,
where the networks of the various operators and the mobile equipment manufactured by different manufacturers operate in a manner harmonized and limited by standards,
where mobile equipment (ME) have a mobile equipment identity code (IMEI) identifying at least the manufacturer and production series of the equipment and the network can request that identity code,
where at least one mobile equipment manufacturer has implemented additional features exceeding standards at least in some production series; and
where the operator's mobile network (ON) includes at least exchange means (MSC) for controlling the operation of the network and register means (NR) for storing the information needed for the operation of the network, and supports at least some of the above-mentioned additional features exceeding standards, characterized in that it includes:
in the operator's network (ON), means (LT) for connecting the information (AFS) defining the additional features of a mobile equipment with the equipment identity code (IMEI) requested from the mobile equipment (ME),
in the operator's network (ON), means (FSC) for determining on the basis of the information (AFS) defining the additional features, which of the additional features the network supports,
in the operator's network (ON), means for signalling the result (SFS) of that determination to the mobile equipment (ME), and
in the mobile equipment (ME), means (FC, MC) for enabling the operation of the additional features supported by the network according to the result (SFS) of the determination signalled to the mobile equipment (ME).

The method for implementing additional features in a mobile communication system uses an equipment identity code identifying at least the manufacturer and production series of a mobile phone. A network may request that code on the basis of the network operator's instructions. The inventive method and mobile communication system are characterized in that the network connects the equipment identity code with the additional features implemented in the equipment. On the basis of this information the network, which may support at least some of the additional features implemented in the equipment, sends information to the equipment about what additional features it supports and on the basis of that information the mobile equipment will then enable the additional features supported by the network.

In accordance with a third aspect of the invention there is provided a communication system comprising a network for supporting predetermined features having means for receiving a signal from a radio unit indicative of features offered thereby, and means for correlating the predetermined features with the features offered by the radio unit for providing a signal indicative of the correlation to the radio unit.

In accordance with a fourth aspect of the invention there is provided a method for allowing additional features to be implemented in a communication system in which a network is capable of supporting predetermined features, the method comprising receiving a signal from a radio unit indicative of features offered thereby, and correlating the predetermined features with the features offered by the radio unit for providing a signal indicative of the correlation.

The signal indicative of features offered may be an equipment identity code.

Now follows a more detailed description of the invention with reference to the enclosed drawing, where
- figure 1: schematically shows a mobile communication system according to the invention,
- figure 2: presents a signalling diagram illustrating the operation of a mobile communication system according to the inventive method,
- figure 3: shows a GSM mobile communication system in which the invention can be applied,
- figure 4: shows the structure of the equipment identity code used in the GSM system, and
- figure 5: illustrates an implementation of the invention using the equipment identity register of the GSM system.

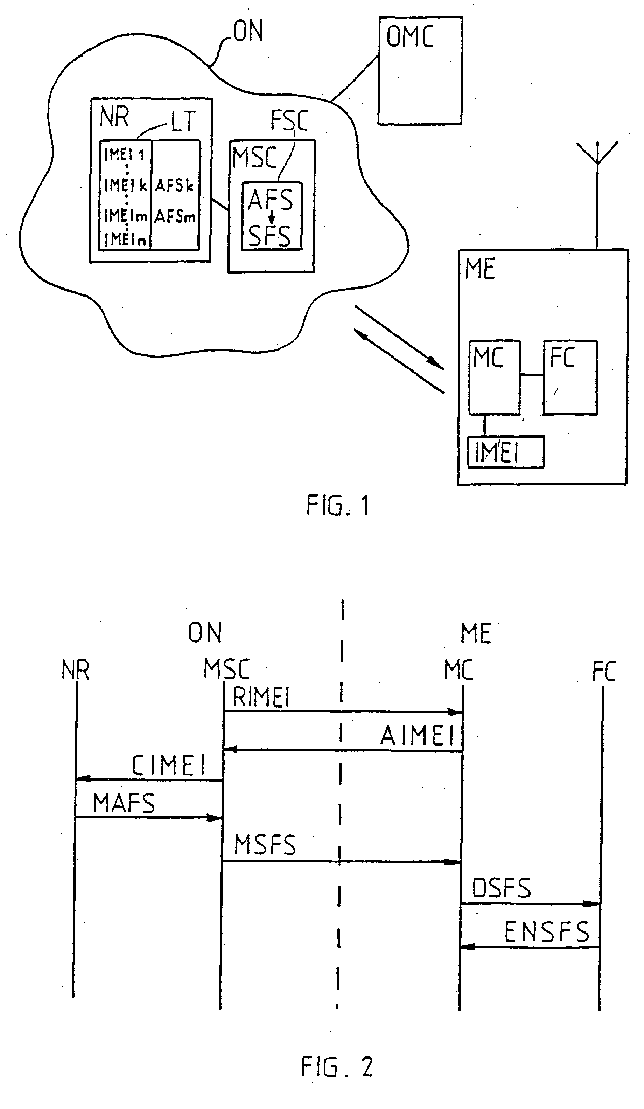

Figure 1 shows a schematic and simplified block diagram of a mobile communication system illustrating the operation of the system according to the inventive method. The operator's network (ON) includes exchange equipment (MSC) controlling the operation of the network when it is switching traffic and providing other services for mobile subscribers. In addition, the operator's network contains databases or registers for permanent or temporary storage of data needed by the network in performing its tasks. These registers are here represented by the block NR. The operator administers and maintains the network with the operation and maintenance centre (OMC). For the implementation of the invention the register block NR contains means LT with which it is possible to connect the additional feature set (AFS) data with the equipment identity codes (IMEI). The means LT can be implemented as a look-up table, for example. In addition, the exchange equipment MSC contains means FSC with which it is possible in the exchange equipment, on the basis of the additional feature set information AFS, to determine information SFS indicating which additional features the network ON is supporting.

Only the features necessary for the description of the invention are shown in a block diagram of the mobile equipment ME communicating with the operator's network ON. Block IMEI illustrates the fact that the mobile equipment ME contains an equipment identity code IMEI permanently stored in the equipment during the manufacturing process, uniquely identifying at least the manufacturer and production series of the equipment. Block MC represents the means for controlling all operation of the mobile equipment; in practice, the means comprise a control unit implemented with a microprocessor. Block FC, here separately shown, represents a feature controller controlling the use of the features implemented in the mobile equipment ME. In practical implementation the feature controller FC is part of the control unit.

Figure 2 depicts operation of a mobile communication system illustrated in figure 1 according to the inventive method in the form of a signalling diagram. The messages and message names shown in the diagram are just illustrative examples not meant to limit the implementation of the invention. In the first stage, the exchange equipment MSC of the operator's network ON requests with the message RIMEI the equipment identity code IMEI of a mobile equipment ME. The control unit MC of the mobile equipment ME is responsible for signalling the equipment identity code IMEI to the network with the message AIMEI. Register NR contains the above-mentioned data and means LT with which the network ON is able to connect the additional feature set information AFS with the equipment identity code IMEI, and to this end, the exchange equipment MSC will send the message CIMEI to the register NR instructing the register to carry out a check-up based on the equipment identity code IMEI. If the register NR contains, in connection with the equipment identity code IMEI, information AFS about additional features implemented in the equipment, the register will fetch the data on the basis of the equipment identity code and send the data to the exchange equipment MSC in a message MAFS. On the basis of the information AFS provided by the means FSC it is determined in the exchange equipment what additional features the operator's network ON is supporting and the resulting information SFS is sent to the mobile equipment in a message MSFS. In the mobile equipment ME this information is then sent to the feature controller FC in a message DSFS and the feature controller will enable the corresponding additional features implemented in the mobile equipment. This is represented by the message ENSFS from the feature controller FC to the control unit MC of the mobile equipment.

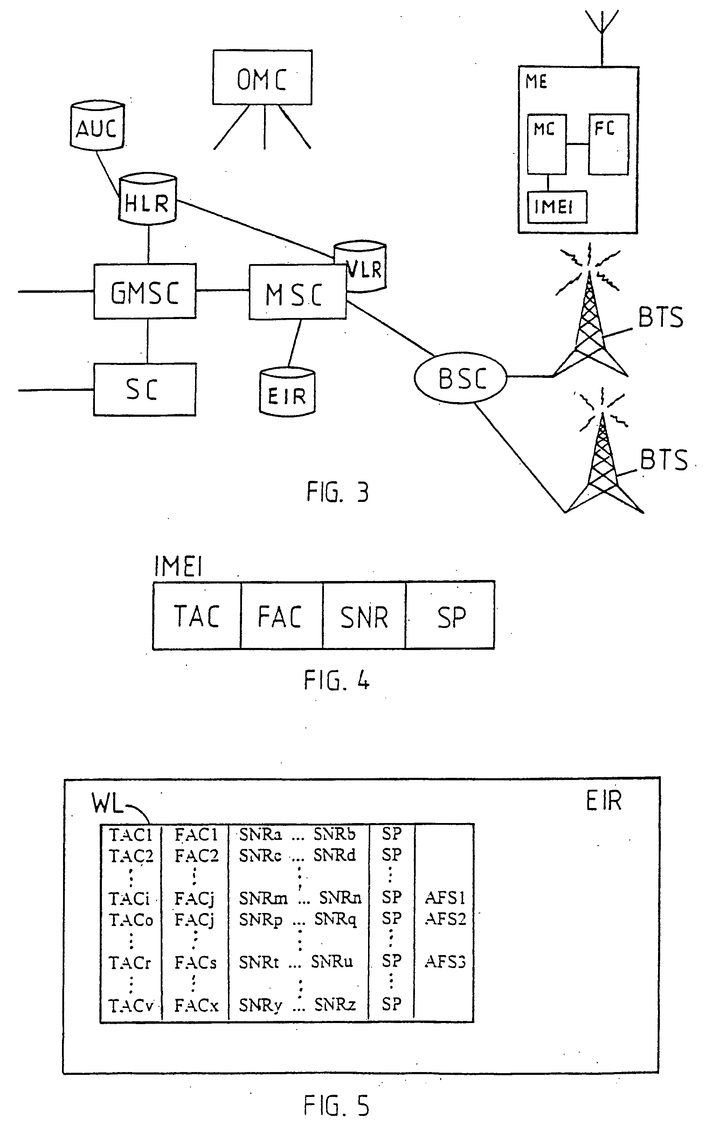

Figure 3 shows a diagram of the European GSM mobile communication system where the invention can be implemented. The figure contains several network elements: the GMSC is a gateway switching centre between the fixed network and mobile network. The home location register HLR is a permanent database containing the information about the mobile subscribers of the network. The MSC is a mobile switching centre handling traffic and providing other services in the mobile network, and the visitor location register VLR is a database storing the mobile subscriber data for the time that the visitor stays in the VLR area. An operator's network may contain several mobile switching centres and visitor location registers. The AUC is a database containing information needed in the subscriber authentication and radio path encryption procedures. The equipment identity register EIR is a database containing information about subscribers' terminal equipment and its main purpose in the network is to supervise the use of terminal equipment. The coverage area of a mobile communication network is divided into cells, each cell having a base station BTS handling radio traffic to mobile equipment ME; the BSC is a base station controller controlling several base stations and handling traffic between a mobile switching centre and base stations BTS. The OMC is an operation and maintenance centre of the network used by the operator to administer and maintain the network. The figure does not show the connections between the OMC and the other network elements. The SC is a short message service centre storing the short messages sent in the network. The mobile equipment ME communicating with the network is shown as in figure 1.

The operation of the GSM mobile communication system is described here only to the extent necessary from the point of view of the description of the invention. A more detailed explanation of the operation of the GSM mobile communication system can be found, for example, in Michel Mouly's and Marie-Bernadette Pautet's The GSM System for Mobile Communications, ISBN 2-9507190-0-7.

In the GSM system, each mobile equipment ME has an equipment identity code IMEI (International Mobile Equipment Identity) that uniquely identifies the equipment. The structure of the equipment identity code is shown in figure 4. The IMEI comprises 15 numbers; the first part TAC is a type approval code, the second part FAC is a manufacturer code, the next part SNR is a serial number, and the last part SP is not used at the moment. The equipment identity code IMEI is permanently stored in the ROM memory of the mobile equipment during the manufacturing process.

In the GSM system, a mobile equipment ME sends its identity code only if the network requests it with a message according to the system specifications. A network operator may give instructions to the network as to when to request the equipment identity code. In a network, it is possible to request the equipment identity code IMEI from the equipment of subscriber A and subscriber B and to check it every time when setting up a connection, for example. On the other hand, to reduce signalling traffic the equipment identity request may be limited to occur, for example, only in connection with location updating and equipment switch-on, i.e. when the subscriber logs on to the network. Currently the equipment identity code in the GSM system is used only in supervising the equipment and in connection with emergency calls. Patent application EP0544449, for example, describes an arrangement for detecting fraudulently identified mobile stations in a cellular mobile telecommunications network. In that arrangement the network request a mobile station to furnish its IMEI code, the mobile station responds with its IMEI code and the network checks the IMEI code to insure that the mobile station is authorized to use the network.

For the supervision of subscriber equipment the network operator maintains an equipment identity register EIR. The operator can more or less independently decide what information is stored in the register, but in the course of international harmonization it has been decided that the database should at least contain the equipment identity codes of type-approved subscriber equipment in three lists; the so-called white list containing the equipment identity codes of type-approved subscriber equipment, and the so-called black list the equipment identity codes of equipment the operation of which has to be prevented in the network because the equipment are stolen or they have serious faults in them, for example. The so-called grey list may contain the equipment identity codes of equipment that have faults in them but not so serious faults that the operation of the equipment should be prevented. The operator can use the grey list as a buffer for equipment identity codes waiting for a decision on whether they belong to the black or white list.

As stated above, a mobile switching centre MSC can request the equipment identity code of a subscriber's equipment with a special request message and, having received an answer, send to the EIR a message according to the system specifications requesting the EIR to check the equipment identity code. The EIR makes the check and sends to the MSC an answer message containing information on the acceptability of the equipment in question. It is also possible that when the equipment has been approved and has no problems the IMEI is stored with the subscriber data in the VLR; then it is possible to verify in connection with subscriber data checking that the subscriber is still using the same equipment, and if this is the case, to send no request to the EIR, thus reducing signalling traffic between the MSCNLR and EIR.

In the preferred implementation of the inventive method in a GSM network, the information about the additional features of an equipment is connected with the equipment identity information in the EIR. As shown in figure 5, one way to accomplish this is to modify the so-called white list WL, containing the codes of type-approved equipment in serial number ranges, so that the serial number ranges for manufacturers that have made an agreement with the network operator on the implementation of additional features are set according to the additional feature sets implemented. A connection is made between these serial number ranges and the information AFS specifying the additional feature set implemented in the manufacturer's equipment in a certain serial number range. Figure 5 shows an example of the list WL for the approved equipment in the equipment identity register EIR, modified according to the invention. The list can be implemented in the register in the form of a look-up table, for instance. In the example shown, the columns from left to right contain the type-approval code, the manufacturer's code, the serial number range, and the additional feature set information AFS corresponding to the serial number range. An example: if the equipment identity code sent by a mobile equipment contains the type-approval code TACo and manufacturer's code FACj and the serial number is in the range SNRp ... SNRq, then the EIR connects this equipment identity with the additional feature set information AFS2 and, in a response to an equipment identity check request, sends this additional feature set information to the mobile switching centre MSC.

Requesting an equipment identity code IMEI from a mobile equipment ME and sending an equipment identity check request to the EIR can be performed in a GSM system according to the invention in a normal way. However, sending the additional feature set data AFS to a mobile switching centre MSC, generating in the MSC the information SFS about the additional features supported by the network corresponding to the additional feature set data, and sending that information further to the mobile equipment ME require changes in the operation of the network.

The operation of the EIR is modified so that when responding to an equipment identity check request it adds the additional feature set information AFS in the answer message. The mobile switching centre has to be supplemented with the means represented by the block FSC in figure 1 with which the MSC will recognize the possible additional feature set information AFS in the answer message of the EIR and generate the corresponding information SFS about the additional features supported by the network and have that information sent to the mobile equipment ME. These additional capabilities can be implemented in an operator's GSM network according to the standard EIR/MSC signalling interface, using the resources in the mobile switching centre MSC as well as the control and memory resources of the switching centre and modifying the software as required.

Sending the SFS information to the mobile equipment ME requires the use of radio channel resources of control layer L3 and, generally, there is only a limited amount of those resources in the GSM system. However, there are a number of other ways to implement the signalling of the SFS message. The first alternative is to use the control channel SDCCH reserved for connection dedicated signalling in which case the SFS signalling would preferably be added to the signalling procedures used for mobility management. This may prove difficult in many operators' networks since the connection dedicated signalling resources in a heavily used network may already suffer from an overload. Another way is to use the BCCH resources: that part of the BCCH which is reserved for cell broadcasts. Only half of the capacity of the BCCH is in specified use; the other half, about 500 bit/s, is not used at the moment. Yet another alternative way to send the SFS information to the mobile equipment is to use the short message service specified in the GSM system.

The implementation described above, illustrated by figure 5, in which the operator's network connects the information about the additional features implemented in the equipment with the equipment identity code IMEI, is at the moment the preferable method of implementation. Some other implementations are, however, outlined below.

One way of performing the task would be to include the information about the additional features implemented in the equipment in the equipment identity code. This could be done by encoding the additional feature set data in the manufacturer's code FAC for which there are six numbers in the equipment identity code. Then a manufacturer should be assigned a manufacturer code range in which the number of code alternatives is sufficient for the indication of the manufacturer, manufacturing location, and the additional feature set information. Another possibility for presenting the additional feature set information is to use the sequence reserved for the serial number in the equipment identity code. Yet another possibility is to draw up a coding scheme using the various parts of the equipment identity code, thus spending less coding capacity in each part. It would also be possible to use the SP part now unused.

When the additional feature set information is included in an encoded form in the equipment identity code IMEI, there will have to be means for recognizing the additional feature set code in the equipment identity code and for sending it or the corresponding information further to a mobile switching centre MSC. It would be natural to have those means located in connection with the equipment identity register, but it is also possible to have the means for analyzing the equipment identity code in other network elements, primarily in a mobile switching centre.

Also when the additional feature set information AFS is connected with the equipment identity code IMEI using a list or look-up table according to figure 5, the connection may in principle take place in network elements other than the equipment identity register. The look-up table or other database can be in a mobile switching centre or in some other register, like the home location register HLR or visitor location register VLR.

Here are some examples of additional features exceeding the standards that can be implemented in the GSM system with the invention.

The first example is extending the listening intervals of discontinuous reception DRx. At the present, a GSM network can request a mobile equipment to disable the DRx, making the equipment to listen to all the paging blocks, or to enable the DRx, making the reception activity a network parameter ranging from 2 to 9 multiframes, ie. the mobile equipment will listen to one of the 2 to 9 multiframes depending on which parameter it has chosen according to the network's instructions. The DRx function has a great impact on the standby time of a mobile station; currently, a mobile station will receive one 20-ms paging message at the intervals of 9 x 230 ms, ie. about 2 seconds, at the most. This maximum period could well be extended to 10 seconds, for example, with an implementation according to the invention.

Another example is extending the transmission power control range. In the GSM networks of some big cities about 50 % of the mobile stations have "too good" a signal quality, and, correspondingly, in those cases the mobile stations are transmitting and base stations receiving on signal levels that are unnecessarily high regarding optimal power consumption and interference risk. This is due to the power control range limitation in the GSM to 30 dB (in phase 2 to 38 dB). Even the lowest power level 5 dBm can be unnecessarily high for the network. This will lead to shorter speech times and higher interference levels in the network. With the invention it is possible to identify the mobile stations with an extended power control range and inform them about the possibility of applying it in the operator's network. The speech-time power control is now performed with the SACCH frames with 3 bits for the power control command. By adding 1 bit in the power control command the number of possible power levels could be doubled.

With an implementation according to the invention it would be possible to develop entirely new features that could be used in a network of an operator supporting them. It would also be possible to give priorities regarding the use of or access to some services on the basis of the equipment identity code.

## Claims

1. A method for implementing additional features in a mobile communication system
in which the network comprises networks maintained and managed by operators,
where the networks of the various operators and the mobile equipment manufactured by different manufacturers operate in a manner harmonized and limited by standards,
where mobile equipment (ME) have a mobile equipment identity code (IMEI) identifying at least the manufacturer and production series of the equipment and the network can request that identity code,
where at least one mobile equipment manufacturer has implemented additional features exceeding standards at least in one production series, and
where the operator's network (ON) supports at least some of the additional features exceeding the standards, **characterized in that**
the operator's network (ON), having requested the equipment identity code (IMEI) from a mobile equipment (ME), connects the information (AFS) defining the additional features of the equipment with the equipment identity code (IMEI),
the operator's network (ON) determines on the basis of the information (AFS) defining the additional features what additional features it supports and signals the result (SFS) of the determination to the mobile equipment (ME), and
on the basis of the signaled result (SFS) of the determination the mobile equipment (ME) enables the operation of the additional features supported by the network.

2. A mobile communication system,
in which the network comprises networks maintained and managed by operators,
where the networks of the various operators and the mobile equipment manufactured by different manufacturers operate in a manner harmonized and limited by standards,
where mobile equipment (ME) have a mobile equipment identity code (IMEI) identifying at least the manufacturer and production series of the equipment and the network can request that identity code,
where at least one mobile equipment manufacturer has implemented additional features exceeding standards at least in some production series, and
where the operator's mobile network (ON) includes at least exchange means (MSC) for controlling the operation of the network and register means (NR) for storing the information needed for the operation of the network, and supports at least some of the above-mentioned additional features exceeding standards,
**characterized in that** it includes:
in the operator's network (ON), means (LT) for connecting the information (AFS) defining the additional features of a mobile equipment with the equipment identity code (IMEI) requested from the mobile equipment (ME),
in the operator's network (ON), means (FSC) for determining on the basis of the information (AFS) defining the additional features, which of the additional features the network supports,
in the operator's network (ON), means for signalling the result (SFS) of that determination to the mobile equipment (ME), and
in the mobile equipment (ME), means (FC, MC) for enabling the operation of the additional features supported by the network according to the result (SFS) of the determination signalled to the mobile equipment (ME).

3. A mobile communication system according to claim 2, **characterized in that** the means for connecting the information defining the additional features (AFS) of the mobile equipment with the equipment identity code (IMEI) requested from the mobile equipment comprise a look-up table (LT) in the register block (NR).

4. A mobile communication system according to claim 2 or 3, **characterized in that** the means (FSC) for determining, on the basis of the additional feature set information (AFS) defining the additional features, which of the additional features the network (ON) supports, are located at the exchange means (MSC).

5. A mobile communication system according to any of the claims 2 to 4, **characterized in that** the mobile communication system is a Global System for Mobile Telecommunications (GSM) and the means (LT) for connecting the information (AFS) defining the additional features of a mobile equipment with the equipment identity code (IMEI) are located in the equipment identity register (EIR) of the network.

6. A mobile communication system according to claim 5, **characterized in that** the equipment identity register (EIR) contains a modified list (WL) of approved equipment identity codes in which a connection is made between the equipment identity code (IMEI) ranges (SNRM ... SNRn; SNRp ... SNRQ; SNRT ... SNRU) and the corresponding information (AFS1; AFS2; AFS3) about the implemented additional features.

7. A mobile communication system according to any of the claims 2 to 4, **characterized in that** the mobile communication system is a Global System for Mobile Telecommunications. (GSM) and the means (LT) for connecting the information (AFS) defining the additional features with the equipment identity code (IMEI) are located in the subscriber data register (HLR, VLR) of the network.

8. A communication system comprising a network (ON) for supporting predetermined features having means for requesting an equipment identity code (IMEI) from a radio unit (ME), **characterized in that** the network has
means (FSC) for receiving an equipment identity code from a radio unit indicative of features offered by the radio unit, and
means (NR, FSC) correlating the predetermined features with the features offered by the radio unit for providing a signal indicative of the correlation to the radio unit.

9. A communication system according to claim 8, **characterized in that** the radio unit is responsive to the signal indicative of the correlation for enabling those features supported by the network.

10. A method for allowing additional features to be implemented in a communication system in which a network (ON) is capable of supporting predetermined features, the method comprising the step of:
- requesting an equipment identity code (IMEI) from a radio unit (ME),
**characterized in that** the method further comprises the steps of:
- receiving an equipment identity code from a radio unit indicative of features offered thereby, and
- correlating the predetermined features with the features offered by the radio unit for providing a signal indicative of the correlation.

## Patentansprüche

1. Verfahren zum Implementieren zusätzlicher Merkmale in einem Mobilkommunikationssystem,
bei dem das Netz Netze umfasst, die von Betreibern gewartet und gesteuert werden,
wobei die Netze der verschiedenen Betreiber und die mobilen Geräte, die von verschiedenen Herstellern hergestellt wurden, in harmonisierter und standardisierter Weise arbeiten,
wobei ein mobiles Gerät (ME) einen Mobilgerät-Identifizierungscode (IMEI) besitzt, der wenigstens den Hersteller und die Produktionsreihe des Geräts identifiziert, und das Netz den Identifizierungscode anfordern kann,
wobei wenigstens ein Mobilgerät-Hersteller zusätzliche Merkmale implementiert hat, die wenigstens in einer Produktionsreihe vorhandene Standards übersteigen, und
wobei das Betreibernetz (ON) wenigstens einige der zusätzlichen Merkmale, die die Standards übersteigen, unterstützt, **dadurch gekennzeichnet, dass**
das Betreibernetz (ON), das den Geräteidentifizierungscode (IMEI) von einem mobilen Gerät (ME) angefordert hat, die die zusätzlichen Merkmale des Geräts definierenden Informationen (AFS) mit dem Geräteidentifizierungscode (IMEI) in Verbindung bringt,
das Betreibernetz (ON) anhand der die zusätzlichen Merkmale definierenden Informationen (AFS) bestimmt, welche zusätzlichen Merkmale es unterstützt, und das Ergebnis (SFS) der Bestimmung dem mobilen Gerät (ME) meldet, und
das mobile Gerät (ME) anhand des gemeldeten Bestimmungsergebnisses (SFS) den Betrieb der von dem Netz unterstützten zusätzlichen Merkmale freigibt.

2. Mobilkommunikationssystem,
bei dem das Netz von Betreibern gewartete und gesteuerte Netze umfasst,
die Netze der verschiedenen Betreiber und die Mobilgeräte, die von verschiedenen Herstellern hergestellt worden sind, in einer harmonisierten und standardisierten Weise arbeiten,
die Mobilgeräte (ME) einen Mobilgerät-Identifizierungscode (IMEI) besitzen, der wenigstens den Hersteller und die Produktionsreihe des Geräts identifiziert, und das Netz den Identifizierungscode anfordern kann,
wenigstens ein Mobilgerät-Hersteller zusätzliche Merkmale implementiert hat, die wenigstens die in einigen Produktionsreihen vorhandenen Standards übersteigen, und
das Mobilnetz (ON) des Betreibers wenigstens Vermittlungsmittel (MSC) zum Steuern des Betriebs des Netzes sowie Registermittel (NR) zum Speichern der für den Betrieb des Netzes erforderlichen Informationen umfasst und wenigstens einige der oben genannten zusätzlichen Merkmale, die Standards übersteigen, unterstützt,
**dadurch gekennzeichnet, dass** es umfasst:
im Betreibernetz (ON) Mittel (LT), die die Informationen (AFS), die die zusätzlichen Merkmale eines Mobilgeräts definieren, mit dem Geräteidentifizierungscode (IMEI), der von dem Mobilgerät (ME) angefordert wird, in Verbindung setzen,
im Betreibernetz (ON) Mittel (FSC), die anhand der die zusätzlichen Merkmale definierenden Informationen (AFS) bestimmen, welche der zusätzlichen Merkmale das Netz unterstützt,
im Betreibernetz (ON) Mittel, die das Ergebnis (SFS) dieser Bestimmung dem Mobilgerät (ME) melden, und
im Mobilgerät (ME) Mittel (FC, MC), die den Betrieb der zusätzlichen Merkmale, die von dem Netz unterstützt werden, entsprechend dem Ergebnis (SFS) der Bestimmung, das dem Mobilgerät (ME) gemeldet wird, freigeben.

3. Mobilkommunikationssystem nach Anspruch 2, **dadurch gekennzeichnet, dass** die Mittel, die die die zusätzlichen Merkmale (AFS) des Mobilgeräts definierenden Informationen mit dem vom Mobilgerät angeforderten Geräteidentifizierungscode (IMEI) in Verbindung bringen, eine Nachschlagtabelle (LT) in dem Registerblock (NR) umfassen.

4. Mobilkommunikationssystem nach Anspruch 2 oder 3, **dadurch gekennzeichnet, dass** sich die Mittel (FSC), die anhand der Zusatzmerkmal-Setzinformationen (AFS), die die zusätzlichen Merkmale definieren, bestimmen, welche der zusätzlichen Merkmale das Netz (ON) unterstützt, in den Vermittlungsmitteln (MSC) befinden.

5. Mobilkommunikationssystem nach einem der Ansprüche 2 bis 4, **dadurch gekennzeichnet, dass** das Mobilkommunikationssystem ein globales System für mobile Telekommunikation (GSM) ist und dass sich die Mittel (LT), die die die zusätzlichen Merkmale eines mobilen Geräts definierenden Informationen (AFS) mit dem Geräteidentifizierungscode (IMEI) in Verbindung bringen, in dem Geräteidentifizierungsregister (EIR) des Netzes befinden.

6. Mobilkommunikationssystem nach Anspruch 5, **dadurch gekennzeichnet, dass** das Geräteidentifizierungsregister (EIR) eine modifizierte Liste (WL) zulässiger Geräteidentifizierungscodes enthält, in der eine Verbindung zwischen den Rängen (SNRM ... SNRn; SNRp ... SNRQ; SNRT ... SNRU) des Geräteidentifizierungscodes (IMEI) und den entsprechenden Informationen (AFS1; AFS2; AFS3) über die implementierten zusätzlichen Merkmale hergestellt wird.

7. Mobilkommunikationssystem nach einem der Ansprüche 2 bis 4, **dadurch gekennzeichnet, dass** das Mobilkommunikationssystem ein globales System für mobile Telekommunikation (GSM) ist und dass sich die Mittel (LT), die die die zusätzlichen Merkmale definierenden Informationen (AFS) mit dem Geräteidentifizierungscode (IMEI) in Verbindung bringen, in dem Teilnehmerdatenregister (HLR, VLR) des Netzes befinden.

8. Kommunikationssystem, das ein Netz (ON) umfasst, das vorgegebene Merkmale unterstützt und Mittel besitzt, die von einer Funkeinheit (ME) einen Geräteidentifizierungscode anfordern,
**dadurch gekennzeichnet, dass** das Netz umfasst:
Mittel (FSC), die von einer Funkeinheit einen Geräteidentifizierungscode empfangen, der von der Funkeinheit angebotene Merkmale angibt, und
Mittel (NR, FSC), die die vorgegebenen Merkmale mit den von der Funkeinheit angebotenen Merkmalen in Korrelation setzen, um ein die Korrelation angebendes Signal für die Funkeinheit bereitzustellen.

9. Kommunikationssystem nach Anspruch 8, **dadurch gekennzeichnet, dass** die Funkeinheit auf das die Korrelation angebende Signal anspricht, um jene von dem Netz unterstützten Merkmale freizugeben.

10. Verfahren zum Zulassen der Implementierung zusätzlicher Merkmale in einem Kommunikationssystem, in dem ein Netz (ON) vorgegebene Merkmale unterstützen kann, wobei das Verfahren den folgenden Schritt umfasst:
- Anfordern eines Geräteidentifizierungscodes (IMEI) von einer Funkeinheit (ME),
**dadurch gekennzeichnet, dass** das Verfahren ferner die folgenden Schritte umfasst:
- Empfangen eines Geräteidentifizierungscodes von einer Funkeinheit, der von dieser angebotene Merkmale angibt, und
- Korrelieren der vorgegebenen Merkmale mit den von der Funkeinheit angebotenen Merkmalen, um ein die Korrelation angebendes Signal bereitzustellen.

## Revendications

1. Procédé pour mettre en oeuvre des caractéristiques supplémentaires dans un système de communication mobile
dans lequel le réseau comprend des réseaux entretenus et gérés par des opérateurs,
où les réseaux des différents opérateurs et l'équipement mobile fabriqué par différents fabricants fonctionnent d'une manière harmonisée et limitée par des normes,
où l'équipement mobile (ME) présente un code d'identité d'équipement mobile (IMEI) identifiant au moins le fabricant et la série de production de l'équipement et le réseau peut demander ce code d'identité,
où au moins un fabricant d'équipement mobile a mis en oeuvre des caractéristiques supplémentaires dépassant les normes dans au moins une série de production, et
où le réseau de l'opérateur (ON) supporte au moins certaines des caractéristiques additionnelles dépassant les normes, **caractérisé en ce que**
le réseau de l'opérateur (ON), ayant demandé le code d'identité de l'équipement (IMEI) à partir d'un équipement mobile (ME), connecte l'information (AFS) définissant les caractéristiques supplémentaires de l'équipement au code d'identité de l'équipement (IMEI), le réseau de l'opérateur (ON) détermine, sur la base de l'information (AFS) définissant les caractéristiques supplémentaires, quelles caractéristiques additionnelles il supporte et signale le résultat (SFS) de la détermination à l'équipement mobile (ME), et
sur la base du résultat signalé (SFS) de la détermination, l'équipement mobile (ME) permet le fonctionnement des caractéristiques supplémentaires supportées par le réseau.

2. Système de communication mobile,
dans lequel le réseau comprend des réseaux entretenus et gérés par des opérateurs,
où les réseaux des différents opérateurs et l'équipement mobile fabriqué par différents fabricants fonctionnent d'une manière harmonisée et limitée par des normes,
où l'équipement mobile (ME) présente un code d'identité d'équipement mobile (IMEI) identifiant au moins le fabricant et la série de production de l'équipement et le réseau peut demander ce code d'identité,
où au moins un fabricant d'équipement mobile a mis en oeuvre des caractéristiques supplémentaires dépassant les normes dans au moins quelques séries de production, et
où le réseau mobile de l'opérateur (ON) comprend au moins un moyen d'échange (MSC) pour commander le fonctionnement du réseau et un moyen d'enregistrement (NR) pour mémoriser les informations nécessaires pour le fonctionnement du réseau, et supporte au moins quelques-unes unes des caractéristiques supplémentaires mentionnées ci-dessus dépassant les normes,
**caractérisé en ce qu'**il comprend :
dans le réseau de l'opérateur (ON), un moyen (LT) pour connecter l'information (AFS) définissant les caractéristiques supplémentaires d'un équipement mobile au code d'identité de l'équipement (IMEI) demandé à partir de l'équipement mobile (ME),
dans le réseau de l'opérateur (ON), un moyen (FSC) pour déterminer sur la base de l'information (AFS) définissant les caractéristiques supplémentaires, les caractéristiques supplémentaires que le réseau supporte,
dans le réseau de l'opérateur (ON), un moyen pour signaler le résultat (SFS) de cette détermination à l'équipement mobile (ME), et
dans l'équipement mobile (ME), des moyens (FC et MC) pour permettre le fonctionnement des caractéristiques supplémentaires supportées par le réseau conformément au résultat (SFS) de la détermination signalée à l'équipement mobile (ME).

3. Système de communication mobile selon la revendication 2, **caractérisé en ce que** le moyen pour connecter l'information définissant les caractéristiques supplémentaires (AFS) de l'équipement mobile au code d'identité de l'équipement (IMEI) demandé à partir de l'équipement mobile comprend une table de recherche (LT) dans le bloc d'enregistrement (NR).

4. Système de communication mobile selon la revendication 2 ou 3, **caractérisé en ce que** le moyen (FSC) pour déterminer, sur la base de l'information de l'ensemble des caractéristiques supplémentaires (AFS) définissant les caractéristiques supplémentaires, les caractéristiques supplémentaires que le réseau (ON) supporte, est situé au centre de communication mobile (MSC).

5. Système de communication mobile selon l'une quelconque des revendications 2 à 4, **caractérisé en ce que** le système de communication mobile est un système mondial de télécommunications mobiles (GSM) est le moyen (LT) pour connecter l'information (AFS) définissant les caractéristiques supplémentaires d'un équipement mobile au code d'identité de l'équipement (IMEI) est situé dans l'enregistreur d'identité d'équipement (EIR) du réseau.

6. Système de communication mobile selon la revendication 5, **caractérisé en ce que** l'enregistreur d'identité d'équipement (EIR) contient une liste modifiée (WL) de codes d'identité d'équipement approuvés, dans laquelle une connexion est faite entre les plaes (SNRM... SNRn ; SNRp... SNRQ ; SNRT... SNRU) des codes d'identité d'équipement (IMEI) et l'information correspondante (AFS1 ; AFS2 ; AFS3) concernant les caractéristiques supplémentaires mises en oeuvre.

7. Système de communication mobile selon l'une quelconque des revendications 2 à 4, **caractérisé en ce que** le système de communication mobile est un système mondial de télécommunications mobiles (GSM) et le moyen (LT) pour connecter l'information (AFS) définissant les caractéristiques supplémentaires au code d'identité d'équipement (IMEI) se situe dans l'enregistreur des données de l'abonné (HLR, VLR) du réseau.

8. Système de communication comprenant un réseau (ON) pour supporter des caractéristiques prédéterminées présentant un moyen pour demander un code d'identité d'équipement (IMEI) à partir d'une unité radio (ME), **caractérisé en ce que** le réseau présente
un moyen (FCS) pour recevoir un code d'identité d'équipement à partir d'une unité radio indicative des caractéristiques offertes par l'unité radio, et
un moyen (NR, FSC) pour mettre en corrélation les caractéristiques prédéterminées avec les caractéristiques offertes par l'unité radio pour fournir un signal indicatif de la corrélation avec l'unité radio.

9. Système de communication selon la revendication 8, **caractérisé en ce que** l'unité radio est réceptive au signal indicatif de la corrélation pour activer les caractéristiques supportées par le réseau.

10. Procédé pour permettre aux caractéristiques supplémentaires d'être mises en oeuvre dans un système de communication dans lequel un réseau (ON) est capable de supporter des caractéristiques prédéterminées, ledit procédé comprenant l'étape consistant à :
- demander un code d'identité d'équipement (IMEI) à partir d'une unité radio (ME),
**caractérisé en ce que** le procédé comprend en outre les étapes consistant à :
- recevoir un code d'identité d'équipement à partir d'une unité radio indicative des caractéristiques offertes de cette façon, et
- mettre en corrélation les caractéristiques prédéterminées avec les caractéristiques offertes par l'unité radio pour fournir un signal indicatif de la corrélation.
